# EUROPEAN PATENT SPECIFICATION

(11) **EP 2 910 736 B1**
(45) Date of publication and mention of the grant of the patent: **28.12.2016**
(21) Application number: 15155557.0
(22) Date of filing: 18.02.2015
(51) Int. Cl.: F01D 5/08, F02C 7/18, F01D 25/12

(54) **MULTI-PIECE BORE BASKET FOR A GAS POWERED TURBINE**
MEHRTEILIGER BOHRLOCHKORB FÜR EINE GASBETRIEBENE TURBINE
PANIER À ALÉSAGE EN PLUSIEURS PARTIES POUR UNE TURBINE À GAZ

(30) Priority: 21.02.2014 US 201461942866 P
(43) Date of publication of application: 26.08.2015
(73) Proprietor: United Technologies Corporation, Farmington, CT 06032 (US)
(72) Inventor: Gons, William M., Camp Hill, PA 17011 (US); Mardis, Joshua L., Palm Beach Gardens, FL 33418 (US)
(74) Representative: Leckey, David Herbert

(56) References cited:
- EP-A2- 0 267 478
- EP-A2- 0 894 942
- EP-A2- 1 132 578
- FR-A1- 2 219 312

## Description

### TECHNICAL FIELD

The present disclosure is related generally to a rotor bore basket, and more particularly to a multi-piece bore basket.

### BACKGROUND

Gas powered turbines, such as those used on commercial aircraft, include a compressor section, a combustor section, and a turbine section. The compressor, combustor and turbine sections operate in conjunction with each other to generate rotation of a shaft that runs through each of the sections. In the case of some aircraft engines, the shaft drives a fan. In alternate examples, such as a land based turbine, the rotation of the shaft can be utilized to generate electrical power.

Each of the compressor section and the turbine section includes multiple rotors arranged sequentially along a fluid flowpath. Each rotor includes a rotor bore protruding radially inward toward the shaft. Some engines include a hot air flow aft of the rotors, relative to fluid flow through the gas powered turbine. Absent a mechanical separation, hot air from the hot air flow contacts the rotor bores, and significantly increase the heat to which the rotor bores are exposed.

In some examples, the rotor bores are particularly heat sensitive and a rotor basket is disposed between the rotor bores and the shaft to protect the rotor bores. The rotor basket defines a hot air passageway between the rotor basket and the shaft, and the air from the hot air flow is passed to a return opening in the shaft through the passageway defined between the basket and the shaft. The basket operates as a heat shield and a flow guide, providing separation between the hot air flow and sensitive rotor bores and shielding the sensitive rotor bores from the heat. Existing rotor baskets are constructed of a single metal cylinder disposed about the shaft, and are a single piece metal cylinder.

EP 0894942 discloses a bore basket according to the preamble of claim 1.

A further bore basket is disclosed in EP 1132578.

### SUMMARY OF THE INVENTION

In accordance with the invention, there is provided a multi-piece bore basket as set forth in claim 1.

A gas turbine according to an exemplary embodiment of this disclosure, among other possible things includes a compressor section, a combustor fluidly connected to the compressor, a turbine section fluidly connected to the combustor, a rotor bore opening disposed radially inward of a plurality of rotors in one of the compressor section and the turbine section, the rotor bore opening is defined by a forward hub structure, a multi-piece bore basket and a connection between the multi-piece bore basket and an aft most rotor bore in the rotor bore opening, the multi-piece bore basket defines a cylinder having an axis, and the multi-piece bore basket includes, a radially outward first cylinder having at least one radially aligned opening on a first end of the multi-piece bore basket, a radially inward second cylinder having a radially aligned opening on a second end of the multi-piece bore basket opposite the first end, and being disposed within the radially outward first cylinder, and an axially aligned gap defined by the radially outward first cylinder and the radially inward second cylinder.

In an embodiment of the foregoing gas turbine, the first end of the multi-piece bore basket is aftward relative to fluid flow, and the second end of the multi-piece bore basket is forward relative to fluid flow.

In a further embodiment of any of the foregoing gas turbines, the radially outward first cylinder contacts the radially inward second cylinder at a radial protrusion on the second end of the multi-piece bore basket, and contacts the radially inward second cylinder at a retaining structure on the first end of the multi-piece bore basket.

In a further embodiment of any of the foregoing gas turbines, the retaining structure is a retaining ring positioned aft of a pair of contact surfaces, the radially outward first cylinder contacts the radially inward second cylinder, the retaining ring is disposed at least partially within one of the radially outward first cylinder and the radially inward second cylinder and the retaining ring contacts a radially aligned edge of the other of the radially outward first cylinder and the radially inward second cylinder.

In a further embodiment of any of the foregoing gas turbines, the retaining structure is a radially protruding shoulder disposed on the radially inward second cylinder, and the radially outward first cylinder contacts at least two surfaces of the shoulder.

In a further embodiment of any of the foregoing gas turbines, a forward end of the first radially outward cylinder contacts a structure of the gas turbine.

A further embodiment of any of the foregoing gas turbines, includes a hub structure at least partially defining a forward wall of the rotor bore opening, and the structure includes a cool air inlet into the rotor bore opening, and the hub, the rotor bore opening, and the multi-piece bore basket define a cool air flowpath from the inlet, along a radially outward surface of the first radially outward cylinder, through the radially aligned opening on a first end of the multi-piece bore basket into the gap defined by the radially outward first cylinder and the radially inward second cylinder, and through the radially aligned opening on a second end of the multi-piece bore basket opposite the first end.

In a further embodiment of any of the foregoing gas turbines, the radially outward first cylinder and the radially inward second cylinder are maintained in position relative to each other at least in part via a tight fit connection between at least one contact surface of the radially inward cylinder and at least one contact surface of the radially outward cylinder.

In a further embodiment of any of the foregoing gas turbines, the radially outward first cylinder and the radially inward second cylinder are maintained in position relative to each other at least in part via compression forces of gas turbine engine components external to the multi-piece bore basket.

In a further embodiment of the multi-piece bore basket, the radially outward first cylinder contacts the radially inward second cylinder at a radial protrusion on the second end of the multi-piece bore basket, and contacts the radially inward second cylinder at a retaining structure on the first end of the multi-piece bore basket.

In a further embodiment of either the foregoing multi-piece bore baskets, the retaining structure is a retaining ring positioned aft of a pair of contact surfaces, the radially outward first cylinder contacts the radially inward second cylinder, the retaining ring is disposed at least partially within one of the radially outward first cylinder and the radially inward second cylinder, and the retaining ring contacts a radially aligned edge of the other of the radially outward first cylinder and the radially inward second cylinder.

In an alternative embodiment of the foregoing multi-piece bore basket, the retaining structure is a radially protruding shoulder disposed on the radially inward second cylinder, and the radially outward first cylinder contacts at least two surfaces of the shoulder.

In a further embodiment of any of the foregoing multi-piece bore baskets, an outer diameter of the radially inward second cylinder at said radial protrusion is approximately the same as an inner diameter of said radially outward first cylinder at the contact between the radially outward first cylinder and the radial protrusion such that the radially outward first cylinder is tight fit to the radially inward second cylinder.

In a further embodiment of any of the foregoing multi-piece bore baskets, an outer diameter of the radially inward second cylinder at the retaining structure is approximately the same as an inner diameter of the radially outward first cylinder at the retaining structure such that the radially outward first cylinder is tight fit to the radially inward second cylinder.

In a further embodiment of the foregoing multi-piece bore basket, the snap fit arm includes a radially aligned snap fit feature on an axial end of the snap fit arm.

Also in accordance with the invention, there is provided a method for cooling rotor bores in a rotor bore opening as set forth in claim 14.

A further embodiment of the foregoing method, includes isolating a hot air flow from the rotor bore opening, by directing the hot air flow through a passageway defined by a gap between the radially inward cylinder and a shaft.

A further embodiment of the foregoing method, includes reducing a pressure of a hot air flow prior to merging the cool air with the hot air, thereby preventing backflow of the hot air through the multi-piece bore basket.

The foregoing features and elements may be combined in any combination without exclusivity, unless expressly indicated otherwise.

These and other features of the present invention can be best understood from the following specification and drawings, the following of which is a brief description.

### BRIEF DESCRIPTION OF THE DRAWINGS

Figure 1 schematically illustrates a gas turbine engine.
Figure 2 schematically illustrates a rotor portion of the gas turbine engine.
Figure 3 schematically illustrates a cross section of the multi-piece bore basket of Figure 2, isolated from the gas turbine engine.
Figure 4 schematically illustrates a cross section of an alternate multi-piece bore basket of isolated from the gas turbine engine.
Figure 5 schematically illustrates the alternate multi-piece bore basket of Figure 4 in a gas turbine engine.

### DETAILED DESCRIPTION OF AN EMBODIMENT

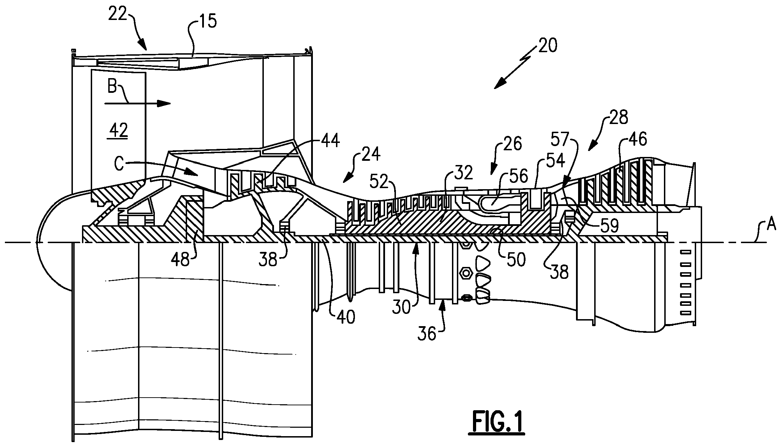

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core air flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48. In some examples, the engine 20 can be an engine without a geared system, such as a low bypass engine.

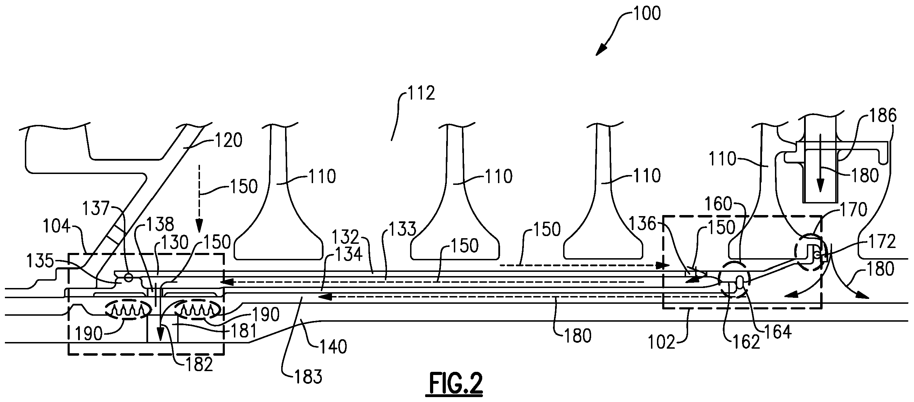

Figure 2 illustrates a rotor bore section 100, including a multi-piece bore basket 130. The rotor bore section 100 corresponds to either the compressor section 24 or the turbine section 28 of the gas turbine engine 20 of Figure 1.

Each rotor in the corresponding section 24, 28 includes a rotor bore 110 that extends radially inward toward a shaft 140. The rotor bores 110 are disposed in a rotor bore opening 112 that is defined by a multi-piece bore basket 130 disposed about a shaft 140, a hub structure 120 located fore of the rotor bore opening 112, and a snap fit arm 170 of the multi-piece bore basket 130 connecting the multi-piece bore basket 130 to an aft most rotor bore 110. A retaining ring 172 maintains the connection between the multi-piece bore basket 130 and the aft most rotor bore 110, and prevents air leakage between the rotor bore section 112 and adjacent air flows. In alternate examples, the snap fit arm 170 can be replaced with a loose fit connection that can slide.

Aft of the rotor bore section 100 is a hot air connection , which provides a hot air flow 180 through an anti-vortex tube 186. In some example gas powered turbines 20, the rotor bores 110 are sensitive to heat and the heat from the hot air flow 180 can reduce the performance of the rotor bores 110 if the hot air flow 180 contacts the rotor bores 110. To prevent the hot air flow 180 from heating the rotor bores 110, the multi-piece bore basket 130 is positioned 100 about the shaft 140 and defines a fluid passageway 183 between the shaft 140 and the multi-piece bore basket 130. In this way, the multi-piece bore basket 130 isolates the hot air flow 180 from the air in the rotor bore opening 112.

The multi-piece bore basket 130 is constructed of a first, radially outward cylinder 132 and a second, radially inward cylinder 134. A fluid passageway 133 is defined by a radial gap between the radially outward cylinder 132 and the radially inward cylinder 134. A radially aligned opening 136 is positioned in the radially outward cylinder 132 at a first end 102 of the multi-piece bore basket 130 and allows air to flow from the rotor bore opening 112 into the fluid passageway 133. Similarly, a radially aligned opening 138 in the second, radially inward cylinder 134 is positioned at a second end 104 of the multi-piece bore basket 130.

Protruding from the shaft 140, and adjacent to an opening 181 on the shaft 140, are multiple sealing elements 190. The sealing elements 190 allow air to pass from the aft side of the sealing elements 190 to the opening 181, and decrease the pressure of air passing through the sealing elements 190. This decreases the pressure of the hot air flow 180 as it crosses the sealing elements 190 to the opening 181. The cold air flow 150 is at a lower pressure than the injected hot air flow 180. Radially outward of the shaft opening 181, and radially inward from the radially aligned opening 138 in the radially inward cylinder 134, the hot air flow 180 joins the cold air flow 150 from the rotor bore opening 112. Without the decrease in pressure from the sealing elements 190, the higher pressure of the hot air flow 180 will cause a backflow of hot air into the rotor bore opening 112 through the multi-piece bore basket 130. The forward sealing element 190 stops the hot air from leaking forward and forces it down into the shaft 181.

In the illustrated example, the cold air flow 150 is provided from the forward hub structure 120 into the rotor bore opening 112 to further cool the rotor bore section 100. In alternate examples, the cold air flow 150 can come from anywhere forward of the hot air 180. The first radially outward cylinder 132 of the multi-piece bore basket 130 forces the forward cold air flow 150 to flow aft, under the rotor bores 110. The cold air flow 150 is directed along the exterior surface of the multi-piece bore basket 130 and cools each of the rotor bores 110. Once the cold air flow 150 reaches the first end 102 of the multi-piece bore basket 130, the cold air flow 150 passes through the radially aligned opening 136 in the radially outward cylinder 132 and into the fluid passageway 133.

The positioning of the radially outward cylinder 132 and the radially inward cylinder 134 of the multi-piece bore basket 130 forces the cold air flow 150 along the fluid passageway 133 to the radially aligned opening 138 at the second end 104 of the radially inward cylinder 134. The cold air flow 150 then passes through the radially aligned opening 138 and joins with the hot air flow 180 at a combined air flow 182. The combined air flow 182 passes through the opening 181 in the shaft 140 and is expelled from the bore basket flow. In some examples, the radially aligned openings 136, 138 are multiple openings disposed circumferentially about the corresponding cylinder 132, 134. In these examples, the radially aligned openings are located at approximately the same axial position, relative to an axis defined by the multi-piece bore basket 130.

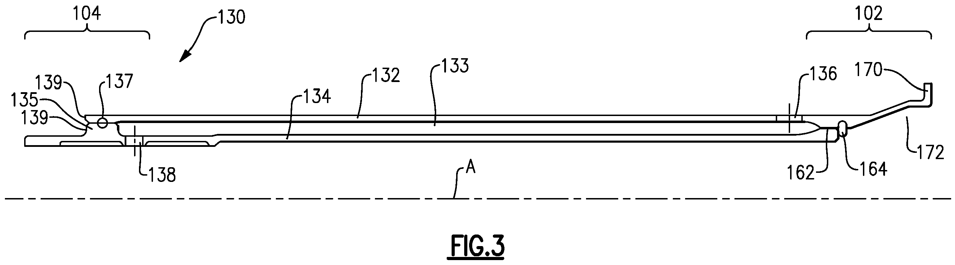

With continued reference to Figure 2, and with like numerals indicating like elements, Figure 3 schematically illustrates a cross section of the multi-piece bore basket 130 of Figure 2 isolated from the gas turbine engine 20. The multi-piece bore basket 130 includes an outward cylinder 132 and an inward cylinder 134. The inward cylinder 134 is disposed within the outward cylinder 132, and the two cylinders 132, 134 are generally coaxial, defining a single axis A. The inward and outward cylinders 132, 134 define a fluid passageway 133 in a gap between the two cylinders.

The outward cylinder 132 includes a radially aligned opening 136 on the first end 102 of the multi-piece bore basket 130. In alternate examples, the radially outward cylinder 132 can include multiple radially aligned openings disposed about the circumference of the first end 102 of the outward cylinder 132. Similarly, the radially inward cylinder 134 includes a radially aligned opening 138 disposed at the second end 104 of the multi-piece bore basket 130. In alternate examples, the radially inward cylinder 134 can include multiple radially aligned openings 138 disposed about the circumference of the second end 104.

The cylinders 132, 134 contact each other at the first end 102 contact surface 162 and a second end 104 contact surface 137. The second end 104 contact surface 137 is defined on a radial protrusion 135 that protrudes from the radially inward cylinder 134. The inner diameter of the radially outward cylinder 132 is sized such that the radially outward cylinder 132 is tight fit to the radially inward cylinder 134 at both the contact surfaces 137, 162. Each of the two cylinders 132, 134 are distinct components and are maintained in position relative to each other in a gas turbine engine via the tight fit in some examples, and via compression forces from other gas turbine engine components in other examples. In yet further examples, the two cylinders are maintained in position relative to each other via a combination of a tight fit contact and the above mentioned compression forces.

Further maintaining the relative axial positions of the radially outward cylinder 132 and the radially inward cylinder 134 is a retaining structure 164. In the illustrated example of Figure 3, the retaining structure 164 is a retaining ring that is partially disposed in the radially outward cylinder 132, and contacts a radially aligned surface of the radially inward cylinder 134.

The radially outward cylinder 132 further includes a snap fit arm 170 that provides a snap fit against an adjacent rotor bore 110 (illustrated in Figure 2) when the multi-piece bore basket 130 is in an installed position. When the multi-piece bore basket 130 is in an installed position, a radially aligned surface 139 at the second end 104 of each of the cylinders 132, 134 contacts an adjacent hub structure 120 (illustrated in Figure 2). The snap fit of the snap fit arm 170 and the contact with the hub structure 120 maintains the multi-piece bore basket 130 in axial position.

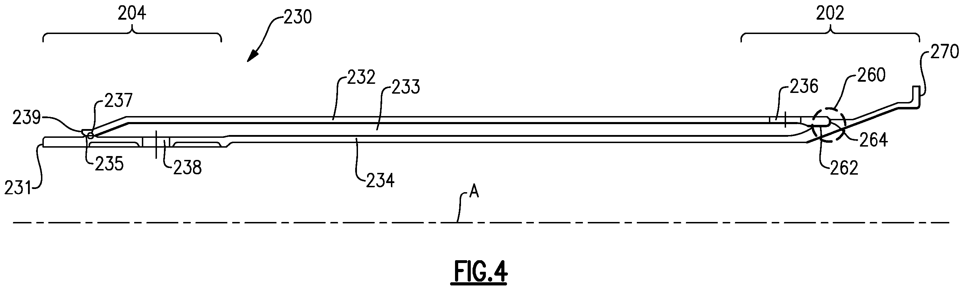

With continued reference to Figures 2 and 3, and with like numerals indicating like elements, Figure 4 schematically illustrates a cross section of an alternate example multi-piece bore basket 230. As with the example of Figure 3, the multi-piece bore basket 230 includes an outward cylinder 232 and an inward cylinder 234. The inward cylinder 234 is disposed within the outward cylinder 232, and the two cylinders 232, 234 are generally coaxial, defining a single axis A. The cylinders 232, 234 define a fluid passageway 233 in a gap between the two cylinders 232, 234.

The radially outward cylinder 232 includes a radially aligned opening 236 on a first end 202 of the multi-piece bore basket 230. In alternate examples, the radially outward cylinder 232 can include multiple radially aligned openings disposed about the circumference of the first end 202 of the radially outward cylinder 232. Similarly, the inward cylinder 234 includes a radially aligned opening 238 disposed at the second end 204 of the multi-piece bore basket 230. In alternate examples, the radially inward cylinder 234 can include multiple radially aligned openings 238 disposed about the circumference of the second end 204.

The radially outward cylinder 232 contacts the radially inward cylinder 234 at a first end 202 contact surface 262 and a second end 204 contact surface 237. The second end 204 contact surface 237 is defined on a radial protrusion 235 that protrudes radially outward from the inward cylinder 234. The first end contact surface 262 is positioned within a retaining structure 260. The retaining structure 260 includes a step feature 264 having a radially aligned surface and an axially aligned surface (the contact surface 262). An axial end of the radially outward cylinder 230 is positioned within the step feature 264 such that both the radially aligned surface, and the axially aligned surface contact the radially outward cylinder 230.

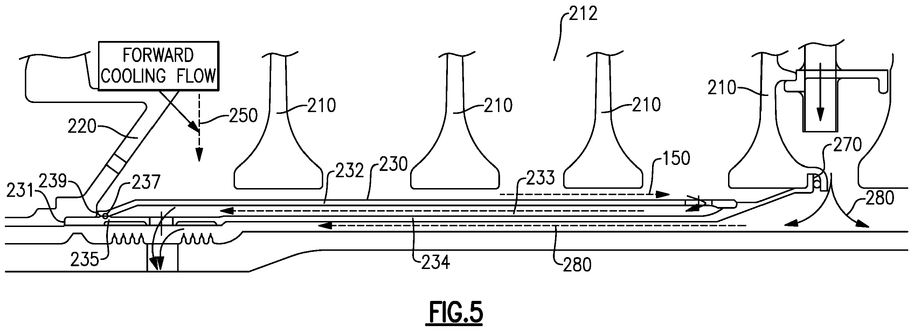

On the second end 204, the radially outward cylinder 232 includes an axial end surface 239. The axial end surface 239 contacts a fore hub structure 220 (illustrated in Figure 5) when the multi-piece bore basket 230 is installed. The contact with the fore hub structure 220 and the retaining feature 260 prevents the radially outward cylinder 232 from shifting axially relative to the radially inward cylinder 234. The radially inward cylinder 234 further includes a snap fit arm 270 that provides a snap fit against an adjacent rotor bore 110 (not pictured) when the multi-piece bore basket 230 is in an installed position. When the multi-piece bore basket 230 is in an installed position, a radially aligned surface 231 at the second end 204 of the multi-piece bore basket 230 contacts the fore hub structure. The snap fit of the snap fit arm 270 and the contact with the hub structure maintains the multi-piece bore basket 130 in axial position, as well as maintaining the two cylinders 232, 234 in axial position relative to each other.

With continued reference to Figures 2 and 4, and with like numerals indicating like elements, Figure 5 schematically illustrates the alternate multi-piece bore basket 230 of Figure 4 installed in a gas powered turbine. As with the example multi-piece bore basket 130 of Figure 2, the multi-piece bore basket 230 directs a cold air flow 250 across the rotor bores 210 and into a fluid passageway 233 in the multi-piece bore basket 230. The snap fit arm 270 of the multi-piece bore basket 230 connects to an aft most rotor bore 210, and a foremost surface 231, 239 or each cylinder 232, 234 contacts the rotor hub structure 220. The example multi-piece bore basket 230 of Figure 5 isolates a hot air flow 280 from the cold air flow 250, and prevents backflow into a rotor bore opening 212 in the manner described above with regards to Figure 2.

While the above multi-piece bore basket 130 is described with regards to a rotor section in a gas powered turbine engine 20, it is understood that the same principles and components could be applied to any gas powered turbine, including a land based turbine, and are not limited to aircraft engines.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A multi-piece rotor bore basket (130;230) for a gas turbine comprising:
a radially outward first cylinder (132;232) having at least one radially aligned opening (136;236) on a first end (102;202) of said multi-piece bore basket (130;230);
a radially inward second cylinder (134;234) having a radially aligned opening (138;238) on a second end (104;204) of said multi-piece bore basket (130;230) opposite said first end (102;202), and being disposed within said radially outward first cylinder (132;232); and
an axially aligned gap (133;233) defined by said radially outward first cylinder (130;230) and said radially inward second cylinder (132;232);
**characterised in that** one of said radially outward first cylinder (132;232) and said radially inward second cylinder (134;234) comprises a snap fit arm (170;270) and said snap fit arm (170;270) is disposed on said first end (102;202) of said multi-piece bore basket (130;230).

2. The multi-piece bore basket of claim 1, wherein said radially outward first cylinder (132;232) contacts said radially inward second cylinder (134;234) at a radial protrusion (135;235) on said second end (104;204) of said multi-piece bore basket (130;230), and contacts said radially inward second cylinder (134;234) at a retaining structure (164;264) on said first end (102;202) of said multi-piece bore basket (130;230).

3. The multi-piece bore basket of claim 2, wherein
said retaining structure is a retaining ring (164) positioned aft of a pair of contact surfaces (162);
said radially outward first cylinder (132) contacts said radially inward second cylinder (134);
said retaining ring (164) is disposed at least partially within one of said radially outward first cylinder (132) and said radially inward second cylinder (134); and
said retaining ring (164) contacts a radially aligned edge of the other of said radially outward first cylinder (132) and said radially inward second cylinder (134).

4. The multi-piece bore basket of claim 2, wherein said retaining structure is a radially protruding shoulder (264) disposed on said radially inward second cylinder (234), and wherein said radially outward first cylinder (232) contacts at least two surfaces of said shoulder (264).

5. The multi-piece bore basket of claim 2, 3 or 4, wherein an outer diameter of said radially inward second cylinder (134;234) at said radial protrusion (135;235) is approximately the same as an inner diameter of said radially outward first cylinder (132;232) at the contact between said radially outward first cylinder (132;232) and said radial protrusion (135;235) such that said radially outward first cylinder (132;232) is tight fit to said radially inward second cylinder (134;234).

6. The multi-piece bore basket of any of claims 2 to 5, wherein an outer diameter of said radially inward second cylinder (134;234) at said retaining structure (164;264) is approximately the same as an inner diameter of said radially outward first cylinder (132;232) at the retaining structure (164;264) such that said radially outward first cylinder (132;232) is tight fit to said radially inward second cylinder (134;234).

7. The multi-piece bore basket of any preceding claim, wherein said radially outward first cylinder (132;232) and said radially inward second cylinder (134;234) are maintained in position relative to each other at least in part via a tight fit connection between at least one contact surface of the radially inward cylinder (134;234) and at least one contact surface of the radially outward cylinder (132;232).

8. The multi-piece bore basket of any preceding claim, wherein said snap fit arm (170;270) comprises a radially aligned snap fit feature on an axial end of said snap fit arm (170;270).

9. A gas turbine (20) comprising:
a compressor section (24);
a combustor (26) fluidly connected to the compressor (24);
a turbine section (28) fluidly connected to the combustor (26);
a rotor bore opening (112;212) disposed radially inward of a plurality of rotors in one of said compressor section (24) and said turbine section (28), wherein the rotor bore opening (112;212) is defined by a forward hub structure, a multi-piece bore basket (130;230) and a connection between said multi-piece bore basket (130;230) and an aft most rotor bore (110;210) in said rotor bore opening (112;212);
said multi-piece bore basket (130;230) defining a cylinder having an axis, and wherein said multi-piece bore basket (130;230) is a multi-piece bore basket (130;230) of any preceding claim.

10. The gas turbine of claim 9, wherein said first end (102;202) of said multi-piece bore basket (130;230) is aftward relative to fluid flow, and wherein said second end (104;204) of said multi-piece bore basket (130;230) is forward relative to fluid flow.

11. The gas turbine of claim 9 or 10, wherein a forward end of said first radially outward cylinder (132;232) contacts a structure of said gas turbine.

12. The gas turbine of claim 9, 10 or 11, further comprising a hub structure (120;220) at least partially defining a forward wall of said rotor bore opening (112;212), and wherein said structure includes a cool air inlet into said rotor bore opening (112;212), and wherein said hub (120;220), said rotor bore opening (112;212), and said multi-piece bore basket (130;230) define a cool air flowpath from said inlet, along a radially outward surface of said first radially outward cylinder (132;232), through said radially aligned opening (136;236) on a first end of said multi-piece bore basket (130;230) into said gap (133;233) defined by said radially outward first cylinder (132;232) and said radially inward second cylinder (134;234), and through said radially aligned opening (138;238) on a second end (104;204) of said multi-piece bore basket (130;230) opposite said first end (102;202).

13. The gas turbine of any of claims 9 to 12, wherein said wherein said radially outward first cylinder (132;232) and said radially inward second cylinder (134;234) are maintained in position relative to each other at least in part via compression forces of gas turbine engine components external to said multi-piece bore basket (130;230).

14. A method for cooling rotor bores in a rotor bore opening (112;212) of a gas turbine comprising:
injecting cool air into a fore end of a rotor bore opening (112;212);
directing said cool air to an aft end (102;202) of said rotor bore opening (112;212) along an exterior surface of a multi-piece bore basket (130;230);
defining an internal fluid passageway (133;233) in said multi-piece bore basket as a gap between a radially inward cylinder (134;234) and a radially outward cylinder (132;232), where the radially outward cylinder (132;232) and the radially inward cylinder (134;234) are separate structures; and
returning said cool air to a fore end (104;204) of said multi-piece bore basket (130;230) through said internal fluid passageway (133;233) of said bore basket (130;230);
the method further optionally comprising:
isolating a hot air flow from said rotor bore opening (112;212), by directing said hot air flow through a passageway defined by a gap between said radially inward cylinder (134;234) and a shaft (140;240), and optionally further comprising:
reducing a pressure of a hot air flow prior to merging said cool air with said hot air, thereby preventing backflow of said hot air through said multi-piece bore basket (130;230);
**characterised in that** one of said radially outward first cylinder (132;232) and said radially inward second cylinder (134;234) comprises a snap fit arm (170;270) and said snap fit arm (170;270) is disposed on said first end (102;202) of said multi-piece bore basket (130;230).

## Patentansprüche

1. Mehrteiliger Rotorbohrungskorb (130; 230) für eine Gasturbine, umfassend:
einen radial außen liegenden ersten Zylinder (132; 232) mit mindestens einer radial ausgerichteten Öffnung (136; 236) an einem ersten Ende (102; 202) des mehrteiligen Bohrungskorbes (130; 230);
einen radial innen liegenden zweiten Zylinder (134; 234), welcher eine radial ausgerichtete Öffnung (138; 238) an einem zweiten Ende (104; 204) des mehrteiligen Bohrungskorbes (130; 230) gegenüber dem ersten Ende (102; 202) umfasst und innerhalb des radial außen liegenden ersten Zylinders (132; 232) angeordnet ist; und
einen axial ausgerichteten Spalt (133; 233), definiert durch den radial außen liegenden ersten Zylinder (130; 230) und den radial innen liegenden zweiten Zylinder (132; 232);
**dadurch gekennzeichnet, dass** einer von dem radial außen liegenden ersten Zylinder (132; 232) und dem radial innen liegenden zweiten Zylinder (134; 234) einen Schnapparm (170; 270) umfasst und der Schnapparm (170; 270) an dem ersten Ende (102; 202) des mehrteiligen Bohrungskorbes (130; 230) angeordnet ist.

2. Mehrteiliger Bohrungskorb nach Anspruch 1, wobei der radial außen liegende erste Zylinder (132; 232) an einem radialen Vorsprung (135; 235) an dem zweiten Ende (104; 204) des mehrteiligen Bohrungskorbes (130; 230) mit dem radial innen liegenden zweiten Zylinder (134; 234) in Kontakt steht und an einer Haltestruktur (164; 264) an dem ersten Ende (102; 202) des mehrteiligen Bohrungskorbes (130; 230) mit dem radial innen liegenden zweiten Zylinder (134; 234) in Kontakt steht.

3. Mehrteiliger Bohrungskorb nach Anspruch 2, wobei
es sich bei der Haltestruktur um einen Haltering (164) handelt, welcher hinter einem Paar Kontaktflächen (162) angeordnet ist;
der radial außen liegende erste Zylinder (132) mit dem radial innen liegenden zweiten Zylinder (134) in Kontakt steht;
der Haltering (164) zumindest teilweise innerhalb von einem von dem radial außen liegenden ersten Zylinder (132) und dem radial innen liegenden zweiten Zylinder (134) angeordnet ist; und
der Haltering (164) mit einer radial ausgerichteten Kante des anderen von dem radial außen liegenden ersten Zylinder (132) und dem radial innen liegenden zweiten Zylinder (134) in Kontakt steht.

4. Mehrteiliger Bohrungskorb nach Anspruch 2, wobei es sich bei der Haltestruktur um eine radial vorspringende Schulter (264), welche an dem radial innen liegenden zweiten Zylinder (234) angeordnet ist, handelt, und wobei der radial außen liegende erste Zylinder (232) mit mindestens zwei Flächen der Schulter (264) in Kontakt steht.

5. Mehrteiliger Bohrungskorb nach Anspruch 2, 3 oder 4, wobei ein Außendurchmesser des radial innen liegenden zweiten Zylinders (134; 234) und des radialen Vorsprungs (135; 235) annähernd einem Innendurchmesser des radial außen liegenden ersten Zylinders (132; 232) an der Kontaktstelle zwischen dem radial außen liegenden ersten Zylinder (132; 232) und dem radialen Vorsprung (135; 235) entspricht, sodass der radial außen liegende erste Zylinder (132; 232) dicht mit dem radial innen liegenden zweiten Zylinder (134; 234) abschließt.

6. Mehrteiliger Bohrungskorb nach einem der Ansprüche 2 bis 5, wobei ein Außendurchmesser des radial innen liegenden zweiten Zylinders (134; 234) an der Haltestruktur (164; 264) annähernd einem Innendurchmesser des radial außen liegenden ersten Zylinders (132; 232) an der Haltestruktur (164; 264) entspricht, sodass der radial außen liegende erste Zylinder (132; 232) dicht mit dem radial innen liegenden zweiten Zylinder (134; 234) abschließt.

7. Mehrteiliger Bohrungskorb nach einem der vorhergehenden Ansprüche, wobei der radial außen liegende erste Zylinder (132; 232) und der radial innen liegende zweite Zylinder (134; 234) zumindest zum Teil über eine dicht abschließende Verbindung zwischen mindestens einer Kontaktfläche des radial innen liegenden Zylinders (134; 234) und mindestens einer Kontaktfläche des radial außen liegenden Zylinders (132; 232) in einer aufeinander bezogenen Position gehalten werden.

8. Mehrteiliger Bohrungskorb nach einem der vorhergehenden Ansprüche, wobei der Schnapparm (170; 270) ein radial ausgerichtetes Schnappelement an einem Achsenende des Schnapparms (170; 270) umfasst.

9. Gasturbine (20), umfassend:
einen Verdichterabschnitt (24);
eine mit dem Verdichter (24) fluidverbundene Brennkammer (26);
einen mit der Brennkammer (26) fluidverbundenen Turbinenabschnitt (28);
eine Rotorbohrungsöffnung (112; 212), welche bezüglich einer Vielzahl von Rotoren in einem von dem Verdichterabschnitt (24) und dem Turbinenabschnitt (28) radial innen angeordnet ist, wobei die Rotorbohrungsöffnung (112; 212) durch eine vordere Nabenstruktur, einen mehrteiligen Bohrungskorb (130; 230) und eine Verbindung zwischen dem mehrteiligen Bohrungskorb (130; 230) und einer ganz hinten angeordneten Rotorbohrung (110; 210) in der Rotorbohrungsöffnung (112; 212) definiert ist;
den mehrteiligen Bohrungskorb (130; 230), welcher einen Zylinder mit einer Achse definiert, und wobei es sich bei dem mehrteiligen Bohrungskorb (130; 230) um einen mehrteiligen Bohrungskorb (130; 230) nach einem der vorhergehenden Ansprüche handelt.

10. Gasturbine nach Anspruch 9, wobei das erste Ende (102; 202) des mehrteiligen Bohrungskorbes (130; 230) bezüglich der Fluidströmung nachgeordnet ist, und wobei das zweite Ende (104; 204) des mehrteiligen Bohrungskorbes (130; 230) bezüglich der Fluidströmung vorgeordnet ist.

11. Gasturbine nach Anspruch 9 oder 10, wobei ein vorderes Ende des ersten radial außen liegenden Zylinders (132; 232) mit einer Struktur der Gasturbine in Kontakt steht.

12. Gasturbine nach Anspruch 9, 10 oder 11, ferner umfassend eine Nabenstruktur (120; 220), welche zumindest teilweise eine vordere Wand der Rotorbohrungsöffnung (112; 212) definiert, und wobei die Struktur einen Kaltlufteinlass in die Rotorbohrungsöffnung (112; 212) umfasst, und wobei die Nabe (120; 220), die Rotorbohrungsöffnung (112; 212) und der mehrteilige Bohrungskorb (130; 230) einen Kaltluftströmungsweg von dem Einlass entlang einer radial außen liegenden Fläche des ersten radial außen liegenden Zylinders (132; 232) durch die radial ausgerichtete Öffnung (136; 236) an einem ersten Ende des mehrteiligen Bohrungskorbes (130; 230) in den durch den radial außen liegenden ersten Zylinder (132; 232) und den radial innen liegenden zweiten Zylinder (134; 234) definierte Spalt (133; 233) und durch die radial ausgerichtete Öffnung (138; 238) an einem zweiten Ende (104; 204) des mehrteiligen Bohrungskorbes (130; 230) gegenüber dem ersten Ende (102; 202) definieren.

13. Gasturbine nach einem der Ansprüche 9 bis 12, wobei der wobei der radial außen liegende erste Zylinder (132; 232) und der radial innen liegende zweite Zylinder (134; 234) zumindest teilweise über Kompressionskräfte von Gasturbinentriebwerkskomponenten außerhalb des mehrteiligen Bohrungskorbes (130; 230) in einer aufeinander bezogenen Position gehalten werden.

14. Verfahren zum Kühlen von Rotorbohrungen in einer Rotorbohrungsöffnung (112; 212) einer Gasturbine, umfassend:
Injizieren kalter Luft in ein vorderes Ende einer Rotorbohrungsöffnung (112; 212);
Leiten der kalten Luft zu einem hinteren Ende (102; 202) der Rotorbohrungsöffnung (112; 212) entlang einer Außenfläche eines mehrteiligen Bohrungskorbes (130; 230).
Definieren eines inneren Fluiddurchtrittes (133; 233) in dem mehrteiligen Bohrungskorb (130; 230) als einen Spalt zwischen einem radial innen liegenden Zylinder (134; 234) und einem radial außen liegenden Zylinder (132; 232), wobei es sich bei dem radial außen liegenden Zylinder (132; 232) und dem radial innen liegenden Zylinder (134; 234) um separate Strukturen handelt; und
Rückführen der kalten Luft zu einem vorderen Ende (104; 204) des mehrteiligen Bohrungskorbes (130; 230) durch den inneren Fluiddurchtritt (133; 233) des Bohrungskorbes (130; 230);
wobei das Verfahren ferner gegebenenfalls umfasst:
Isolieren einer Warmluftströmung von der Rotorbohrungsöffnung (112; 212) durch Leiten der Warmluftströmung durch einen Durchtritt, welcher durch einen Spalt zwischen dem radial innen liegenden Zylinder (134; 234) und einer Welle (140; 240) definiert ist, und gegebenenfalls ferner umfasst:
Verringern eines Drucks einer Warmluftströmung vor dem Vermischen der kalten Luft mit der warmen Luft, wodurch eine Rückströmung der warmen Luft durch den mehrteiligen Bohrungskorb (130; 230) verhindert wird;
**dadurch gekennzeichnet, dass** einer von dem radial außen liegenden ersten Zylinder (132; 232) und dem radial innen liegenden zweiten Zylinder (134; 234) einen Schnapparm (170; 270) umfasst und der Schnapparm (170; 270) an dem ersten Ende (102; 202) des mehrteiligen Bohrungskorbes (130; 230) angeordnet ist.

## Revendications

1. Panier à alésage de rotor en plusieurs parties (130 ; 230) pour une turbine à gaz, comprenant :
un premier cylindre radialement vers l'extérieur (132 ; 232) ayant au moins une ouverture alignée radialement (136 ; 236) à une première extrémité (102 ; 202) dudit panier à alésage en plusieurs parties (130 ; 230) ;
un deuxième cylindre radialement vers l'intérieur (134 ; 234) ayant une ouverture alignée radialement (138 ; 238) à une deuxième extrémité (104 ; 204) dudit panier à alésage en plusieurs parties (130 ; 230) opposée à ladite première extrémité (102 ; 202), et étant disposé à l'intérieur dudit premier cylindre radialement vers l'extérieur (132 ; 232) ; et
une fente alignée axialement (133 ; 233) définie par ledit premier cylindre radialement vers l'extérieur (130 ; 230) et ledit deuxième cylindre radialement vers l'intérieur (132 ; 232) ;
**caractérisé en ce que** l'un d'entre ledit premier cylindre radialement vers l'extérieur (132 ; 232) et ledit deuxième cylindre radialement vers l'intérieur (134 ; 234) comprend un bras à fixation par encliquetage (170 ; 270) et **en ce que** ledit bras à fixation par encliquetage (170 ; 270) est disposé sur ladite première extrémité (102 ; 202) dudit panier à alésage en plusieurs parties (130 ; 230).

2. Panier à alésage en plusieurs parties selon la revendication 1, dans lequel ledit premier cylindre radialement vers l'extérieur (132 ; 232) entre en contact avec ledit deuxième cylindre radialement vers l'intérieur (134 ; 234) au niveau d'une protubérance radiale (135 ; 235) sur ladite deuxième extrémité (104 ; 204) dudit panier à alésage en plusieurs parties (130 ; 230) et entre en contact avec ledit deuxième cylindre radialement vers l'intérieur (134 ; 234) au niveau d'une structure de retenue (164 ; 264) sur ladite première extrémité (102 ; 202) dudit panier à alésage en plusieurs parties (130 ; 230).

3. Panier à alésage en plusieurs parties selon la revendication 2, dans lequel
ladite structure de retenue est une bague de retenue (164) positionnée à l'arrière d'une paire de surfaces de contact (162) ;
ledit premier cylindre radialement vers l'extérieur (132) entrant en contact avec ledit deuxième cylindre radialement vers l'intérieur (134) ;
ladite bague de retenue (164) étant disposée au moins partiellement à l'intérieur d'un d'entre ledit premier cylindre radialement vers l'extérieur (132) et ledit deuxième cylindre radialement vers l'intérieur (134) ; et
ladite bague de retenue (164) entrant en contact avec un bord aligné radialement de l'autre d'entre ledit premier cylindre radialement vers l'extérieur (132) et ledit deuxième cylindre radialement vers l'intérieur (134).

4. Panier à alésage en plusieurs parties selon la revendication 2, dans lequel ladite structure de retenue est un épaulement en saillie radiale (264) disposé sur ledit deuxième cylindre radialement vers l'intérieur (234), et dans lequel ledit premier cylindre radialement vers l'extérieur (232) entre en contact avec au moins deux surfaces dudit épaulement (264).

5. Panier à alésage en plusieurs parties selon la revendication 2, 3 ou 4, dans lequel un diamètre extérieur dudit deuxième cylindre radialement vers l'intérieur (134 ; 234) au niveau de ladite protubérance radiale (135 ; 235) est approximativement le même qu'un diamètre intérieur dudit premier cylindre radialement vers l'extérieur (132 ; 232) au niveau du contact entre ledit premier cylindre radialement vers l'extérieur (132 ; 232) et ladite protubérance radiale (135 ; 235) de sorte que ledit premier cylindre radialement vers l'extérieur (132 ; 232) est ajusté de manière serrée sur ledit deuxième cylindre radialement vers l'intérieur (134 ; 234).

6. Panier à alésage en plusieurs parties selon l'une quelconque des revendications 2 à 5, dans lequel un diamètre extérieur dudit deuxième cylindre radialement vers l'intérieur (134 ; 234) au niveau de ladite structure de retenue (164 ; 264) est approximativement le même qu'un diamètre intérieur dudit premier cylindre radialement vers l'extérieur (132 ; 232) au niveau de la structure de retenue (164 ; 264) de sorte que ledit premier cylindre radialement vers l'extérieur (132 ; 232) est ajusté de manière serrée sur ledit deuxième cylindre radialement vers l'intérieur (134 ; 234).

7. Panier à alésage en plusieurs parties selon l'une quelconque des revendications précédentes, dans lequel ledit premier cylindre radialement vers l'extérieur (132 ; 232) et ledit deuxième cylindre radialement vers l'intérieur (134 ; 234) sont maintenus en position l'un par rapport à l'autre au moins en partie via une connexion à ajustement serré entre au moins une surface de contact du cylindre radialement vers l'intérieur (134 ; 234) et au moins une surface de contact du cylindre radialement vers l'extérieur (132 ; 232).

8. Panier à alésage en plusieurs parties selon l'une quelconque des revendications précédentes, dans lequel ledit bras à fixation par encliquetage (170 ; 270) comprend un élément de fixation par encliquetage sur une extrémité axiale dudit bras à fixation par encliquetage (170 ; 270).

9. Turbine à gaz (20) comprenant :
une section de compresseur (24) ;
une chambre de combustion (26) raccordée de façon fluidique au compresseur (24) ;
une section de turbine (28) raccordée de façon fluidique à la chambre de combustion (26) ;
une ouverture d'alésage de rotor (112 ; 212) disposée radialement vers l'intérieur d'une pluralité de rotors dans l'une d'entre ladite section de compresseur (24) et ladite section de turbine (28), dans laquelle l'ouverture d'alésage de rotor (112 ; 212) est définie par une structure à moyeu avant, un panier à alésage en plusieurs parties (130 ; 230) et une connexion entre ledit panier à alésage en plusieurs parties (130 ; 230) et un alésage de rotor le plus à l'arrière (110 ; 210) dans ladite ouverture d'alésage de rotor (112 ; 212) ;
ledit panier à alésage en plusieurs parties (130 ; 230) définissant un cylindre ayant un axe, et dans laquelle ledit panier à alésage en plusieurs parties (130 ; 230) est un panier à alésage en plusieurs parties (130 ; 230) selon l'une quelconque des revendications précédentes.

10. Turbine à gaz selon la revendication 9, dans laquelle ladite première extrémité (102 ; 202) dudit panier à alésage en plusieurs parties (130 ; 230) est en aval par rapport au flux de fluide, et dans laquelle ladite deuxième extrémité (104 ; 204) dudit panier à alésage en plusieurs parties (130 ; 230) est en amont par rapport audit flux de fluide.

11. Turbine à gaz selon la revendication 9 ou 10, dans laquelle une extrémité avant dudit premier cylindre radialement vers l'extérieur (132 ; 232) entre en contact avec une structure de ladite turbine à gaz.

12. Turbine à gaz selon la revendication 9, 10 ou 11, comprenant en outre une structure à moyeu (120 ; 220) définissant au moins partiellement une paroi antérieure de ladite ouverture d'alésage de rotor (112 ; 212), et dans laquelle ladite structure comprend une entrée d'air froid dans ladite ouverture d'alésage de rotor (112 ; 212), et dans laquelle ledit moyeu (120 ; 220), ladite ouverture d'alésage de rotor (112 ; 212) et ledit panier à alésage en plusieurs parties (130 ; 230) définissent un trajet de circulation d'air froid depuis ladite entrée, le long d'une surface radialement vers l'extérieur dudit premier cylindre radialement vers l'extérieur (132 ; 232) à travers ladite ouverture alignée radialement (136 ; 236) à une première extrémité dudit panier à alésage en plusieurs parties (130 ; 230) jusque dans ladite fente (133 ; 233) définie par ledit premier cylindre radialement vers l'extérieur (132 ; 232) et ledit deuxième cylindre radialement vers l'intérieur (134 ; 234) et à travers ladite ouverture alignée radialement (138 ; 238) à une deuxième extrémité (104 ; 204) dudit panier à alésage en plusieurs parties (130 ; 230) opposée à ladite première extrémité (102 ; 202).

13. Turbine à gaz selon l'une quelconque des revendications 9 à 12, dans laquelle ledit premier cylindre radialement vers l'extérieur (132 ; 232) et ledit deuxième cylindre radialement vers l'intérieur (134 ; 234) sont maintenus en position l'un par rapport à l'autre au moins en partie via des forces de compression de composants de moteur de turbine à gaz externes audit panier à alésage en plusieurs parties (130 ; 230).

14. Procédé pour refroidir des alésages de rotor dans une ouverture d'alésage de rotor (112 ; 212) d'une turbine à gaz, comprenant :
l'injection d'air froid dans une extrémité avant d'une ouverture d'alésage de rotor (112 ; 212) ;
l'envoi dudit air froid vers une extrémité arrière (102 ; 202) de ladite ouverture d'alésage de rotor (112 ; 212) le long d'une surface extérieure d'un panier à alésage en plusieurs parties (130 ; 230) ;
la définition d'un passage interne de fluide (133 ; 233) dans ledit panier à alésage en plusieurs parties en tant que fente entre un cylindre radialement vers l'intérieur (134 ; 234) et un cylindre radialement vers l'extérieur (132 ; 232), où le cylindre radialement vers l'extérieur (132 ; 232) et le cylindre radialement vers l'intérieur (134 ; 234) sont des structures distinctes ; et
le renvoi dudit air froid vers une extrémité avant (104 ; 204) dudit panier à alésage en plusieurs parties (130 ; 230) à travers ledit passage interne de fluide (133 ; 233) dudit panier à alésage (130 ; 230) ;
le procédé comprenant en outre optionnellement :
l'isolation d'un flux d'air chaud de ladite ouverture d'alésage de rotor (112 ; 212) en envoyant ledit flux d'air chaud à travers un passage défini par une fente entre ledit cylindre radialement vers l'intérieur (134 ; 234) et un arbre (140 ; 240), et comprenant en outre optionnellement :
la réduction d'une pression d'un flux d'air chaud avant de faire fusionner ledit air froid avec ledit air chaud en empêchant de la sorte un reflux dudit air chaud à travers ledit panier à alésage en plusieurs parties (130 ; 230) ;
**caractérisé en ce que** l'un d'entre ledit premier cylindre radialement vers l'extérieur (132 ; 232) et ledit deuxième cylindre radialement vers l'intérieur (134 ; 234) comprend un bras à fixation par encliquetage (170 ; 270) et ledit bras à fixation par encliquetage (170 ; 270) étant disposé sur ladite première extrémité (102 ; 202) dudit panier à alésage en plusieurs parties (130 ; 230).
